Europäisches Patentamt
European Patent Office
Office européen des brevets

(19) (11) Veröffentlichungsnummer: **0 005 481**
**A1**

(12) # EUROPÄISCHE PATENTANMELDUNG

(21) Anmeldenummer: **79101356.8**

(22) Anmeldetag: **03.05.79**

(51) Int. Cl.$^2$: **G 01 N 27/12**
H 01 L 7/00

(30) Priorität: **16.05.78 DE 2821267**

(43) Veröffentlichungstag der Anmeldung:
**28.11.79 Patentblatt 79/24**

(84) Benannte Vertragsstaaten:
**DE FR GB IT NL**

(71) Anmelder: **SIEMENS AKTIENGESELLSCHAFT Berlin und München**
**Postfach 261**
**D-8000 München 22(DE)**

(72) Erfinder: **Treitinger, Ludwig, Dipl.-Ing.**
**Klobensteiner Strasse 25**
**D-8000 München 90(DE)**

(72) Erfinder: **Köpl, Rupert**
**Steinkirchnerstrasse 7**
**D-8000 München 71(DE)**

(72) Erfinder: **Pink, Hans, Dr.**
**Possenhofenerstrasse 38a**
**D-8130 Starnberg(DE)**

(54) **Gassensoren und Verfahren zu ihrer Herstellung.**

(57) Die Erfindung bezieht sich auf Gassensoren, bei denen der sensitive Halbleiterkörper aus einer dünnen Schicht eines Metalloxid-Halbleiters besteht. Zur Herstellung der Metalloxid-Halbleiter-Dünnschicht wird ein Substrat mit einem Film einer organischen Lösung beschichtet und der Film durch stufenweise Wärmebehandlung in eine dünne Metalloxid-Halbleiterschicht übergeführt. Die Lösung enthält eine Metallverbindung, die bei der thermischen oder hydrolytischen Zersetzung in Metalloxid übergeht. Geeignet sind binäre und ternäre Verbindungen der Formel $A_nO_m$ und $A_nB_mO_p$, worin sowohl A als auch B ein Element der Gruppe der Seltenen Erden, der Edelmetalle oder der Übergangsmetalle und O Sauerstoff darstellen und n, m und p die Anteile der jeweiligen Elemente sind. Die Beschichtung kann durch Tauchen, Besprühen, Aufschleudern oder Auftropfen erfolgen. Die dünne Halbleiterschicht kann mit mindestens einem Element aus der Gruppe der Seltenen Erden, der Edelmetalle oder der Übergangsmetalle dotiert sein. Gassensoren gemäß der Erfindung bestehen aus einem Substrat (1), einer aus der angeführten organischen Lösung hergestellten dünnen Metalloxid-Halbleiterschicht (2) und einer Kontaktschicht (3) aus Edelmetall. Erfindungsgemäße Gassensoren sind zum Nachweis und zur Bestimmung von verschiedenen Schadgasen wie z.B. CO, $C_nH_m$, $C_6H_6$ und insbesondere Äthanol in Luft und Abgasen geeignet (Fig. 1).

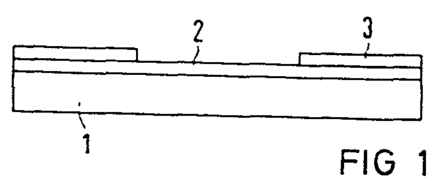


FIG 1

EP 0 005 481 A1

Croydon Printing Company Ltd

SIEMENS AKTIENGESELLSCHAFT
Berlin und München

Unser Zeichen
VPA 78 P 7046 EUR

## Gassensoren und Verfahren zu ihrer Herstellung

Die Erfindung betrifft Gassensoren auf Basis von Metalloxid-Halbleitern und Verfahren zu deren Herstellung durch Aufbringen einer Metalloxid-Halbleiterschicht auf ein Substrat und Anbringen der Kontaktschichten und Trägerheizvorrichtungen.

Es ist bekannt, daß Metalloxid-Halbleitermaterialien bei der Adsorption von Gasen ihre elektrische Leitfähigkeit ändern. Solche Halbleitermaterialien werden daher als Fühlkörper in Gassensoren und Meßgeräten beispielsweise zum Nachweis und zur Bestimmung von Kohlenoxid (CO), Methan ($CH_4$) und Benzol ($C_6H_6$) eingebaut. Halbleitergassensoren auf Basis von kompaktem $SnO_2$ sind bekannt. Sie sind auf dem Markt in Form von gesinterten Pillen (Preßkörpern) (DT-PS 2 005 497 und DT-AS 2 044 851).

Td 2 Dm / 8.5.1978

Auch Dünnschichtgassensoren sind bekannt, wobei die Dünnschicht z.B. eine $SnO_2$-Schicht durch Sputtern, Aufdampfen, anodische Oxidation, Elektronenstrahlverdampfen oder Chemical Vapour Deposition (CVD) und Abscheidung aus der Gasphase hergestellt ist.

Die so erzeugten Beschichtungen sind aber vielfach nicht genügend homogen und weisen eine für die Anwendung als Gassensor nicht genügend zugängliche Oberfläche auf, d.h. die "effektive" Oberfläche ist zu klein.

Aufgabe der Erfindung sind hochempfindliche, schnelle Halbleiter-Gassensoren auf Basis von dünnen Metalloxid-Halbleiterschichten und Verfahren zu ihrer Herstellung.

Die Lösung dieser Aufgabe erfolgt erfindungsgemäß durch Beschichten eines elektrisch isolierenden Trägers mit einem Film einer organischen Lösung enthaltend eine Metallverbindung, die bei thermischer oder hydrolytischer Zersetzung in Metalloxid übergeht und durch stufenweise Wärmebehandlung zur Umwandlung des Lösungsfilmes in eine dünne Metalloxid-Halbleiterschicht. Es bleibt auf dem Substrat ein zusammenhängender festhaftender Film zurück, der nach seiner Zersetzung eine dichte gleichmäßige und ebenfalls festhaftende Oxidschicht liefert.

Für die Beschichtung geeignete organische Lösungen enthalten Metallverbindungen, die bei der thermischen oder hydrolytischen Zersetzung quantitativ in Metalloxid übergehen und als Nebenprodukt der Reaktion nur Gase in möglichst geringen Mengen freisetzen. Die Metallverbindungen sind entweder in wäßrigen oder organischen Lösungsmittelsystemen unzersetzt löslich.

Die genannten Bedingungen werden vor allem von Metallsalzen der niederen Carbonsäuren wie Ameisen-, Essig- und Propionsäure und von Acetylacetonaten erfüllt. Auch Metallhalogenide sind geeignet. So zersetzen sich z.B. Metallacetate gemäß

$$Me(OCOCH_3)_2 + Energie \longrightarrow MeO + O(COCH_3)_2$$
$$Me(OCOCH_3)_2 + H_2O \longrightarrow MeO + 2CH_3COOH,$$

Acetylacetonate nach

$$Me(C_5H_7O_2)_2 + Energie \xrightarrow{O_2} MeO + 10CO_2 + 7H_2O$$

und Metallhalogenide entsprechend

$$MeCl_2 + H_2O \longrightarrow MeO + 2\ HCl.$$

Zinn bildet z.B. in seinen beiden vorkommenden Oxidationsstufen (II, IV) Acetate. Zinn(II)acetat geht bei seiner Zersetzung in SnO, Zinn(IV)acetat in $SnO_2$ über. Letzteres ist in kristalliner Form sehr feuchtigkeitsempfindlich und seine Reindarstellung daher schwierig.

Besonders gute Resultate wurden mit dem leicht zugänglichen Dichlordiacetostannan $SnCl_2 \cdot (OCOCH_3)_2$ erhalten. Es entsteht unter Wärmeentwicklung aus $SnCl_4$ und $CH_3COOH$ unabhängig vom Molverhältnis der Reaktanten als weiße Kristallmasse. Für die Abscheidung einer $SnO_2$-Schicht auf einem Substrat gemäß der Erfindung wurde auf eine Isolierung der Festsubstanz verzichtet und die bei der Herstellung anfallende Lösung eingesetzt.

Die Herstellung kann aus einer organischen Lösung erfolgen, die bei der Zersetzung binäre Verbindungen der allgemeinen Formel

$$A_nO_m$$

liefert, wobei A ein Element aus der Gruppe der Seltenen Erden wie z.B. Nd, Gd, Ho, Sm, Er, Yb, Pr, der Edelmetalle wie z.B. Au, Pt, Pd oder der Übergangselemente wie z.B. Zn, Fe, Co, Cu, Ag, Al, In und O Sauerstoff

darstellen und n und m die Anteile des jeweiligen Elementes sind.

Auch organische Lösungen, die bei der Zersetzung ternäre Verbindungen der allgemeinen Formel

$$A_nB_mO_p$$

bilden, worin sowohl A als auch B eines der oben angeführten Elemente und O Sauerstoff darstellen und n, m und p die Anteile des jeweiligen Elementes sind, sind geeignet.

Die Erfindung betrifft auch einen Gassensor mit einer dünnen Metalloxid-Halbleiterschicht hergestellt aus einer organischen Lösung, welche eine Metallverbindung enthält, die bei der thermischen oder hydrolytischen Zersetzung in Metalloxid übergeht. Gassensoren gemäß der Erfindung zeichnen sich vor allem durch hohe Empfindlichkeit und hohen Gasdurchtritt aus.

Die Beschichtung mit der organischen Lösung kann durch Eintauchen des Substrats in die Lösung, durch Auftropfen der Lösung beispielsweise mittels Pipette, durch Aufschleudern der Lösung auf das Substrat oder durch Besprühen des vorzugsweise geheizten Substrats mit der Lösung erfolgen. Die Auswahl des Verfahrens hat Art und Oberflächengüte des Substrats, Viskosität und Zusammensetzung der Lösung sowie insbesondere die thermischen Bedingungen beim Aufbringen der Lösung zu berücksichtigen. Vor dem Beschichten werden die Substrate in einem Ultraschallbad gereinigt und die Oberfläche eventuell angeätzt.

Gemäß weiterer Erfindung kann die dünne Metalloxid-Halbleiterschicht dotiert sein, wobei der Metalloxid-Halbleiter mindestens ein Dotierungselement enthalten kann. Als Dotierungselemente sind die Übergangselemente,

Edelmetalle und die Seltenen Erden geeignet wie z.B. Zn, Cu, Ag, La, Cd, Lu.

Der Ablauf der Wärmebehandlung beeinflußt weitgehend die kristalline Struktur und die Oberflächenbeschaffenheit der entstehenden Dünnschicht. Erfolgen Abdampfen des Lösungsmittels und Umwandlung in das Metalloxid simultan (z.B. beim Aufsprühen auf ein genügend heißes Substrat), so entstehen sehr dichte, festhaftende Schichten hoher Leitfähigkeit. Die effektive Oberfläche ist aber klein. Für die Entstehung großer effektiver Oberflächen ist es günstig, den Lösungsfilm bei Raumtemperatur oder bei Temperaturen bis zur Verdampfungstemperatur des Lösungsmittels (ca. 80°C) aufzubringen, in einem ersten Behandlungsschritt das Lösungsmittel zu verdampfen und in einem nächsten Schritt durch Erhitzen an Luft oder in anderer sauerstoffhaltiger Atmosphäre die Umwandlung in die Oxidschicht zu bewirken.

Die entstehende Schicht kann kristallin oder amorph sein. Dies hängt nicht nur von dem Substrat ab, sondern auch von der Lösung.

So sind z.B. undotierte $SnO_2$-Schichten auf Quarzglas amorph, wie Röntgenbeugungsmessungen zeigen. Auf $Al_2O_3$-Keramik (im weiteren "Keramik" genannt) sind undotierte $SnO_2$-Schichten, jedoch kristallin. Hingegen erhält man bei Zn-Dotierung auch auf Keramikunterlage amorphe $SnO_2$-Schichten. Wird die Lösung auf eine kalte Unterlage aufgebracht, das Lösungsmittel bei Temperaturen bis zu 80°C verdampft und der entstandene Film bei Temperaturen bis 250°C in eine Metalloxidschicht umgesetzt, so entsteht eine sehr poröse, mit vielen Spalten durchsetzte Zinnoxidschicht. Die Schicht hat eine fast schwammartige Beschaffenheit, die für katalytische Prozesse besonders günstig ist. Die Schichtdicke wurde bei Schichten auf

transparenter Unterlage aus optischen Transmissionsmessungen mit Hilfe der Interferenzmaxima bestimmt. Sie beträgt etwa 200 nm bis 500 nm. Die gleichen Dicken können aus den REM-Bildern entnommen werden.

Die Kontaktierung der Schicht kann durch Aufpressen von Edelmetallkontakten, z.B. Au-Pt-Legierung, oder durch Aufdampfen oder Aufsputtern von Edelmetall-Dünnschichten, z.B. Pt, Au, Au-Pd-Legierung, erfolgen.

Gemäß der Erfindung hergestellte Gassensoren finden Verwendung zum Nachweis und zur Bestimmung von verschiedenen Schadgasen wie z.B. Kohlenmonoxyd (CO), Kohlenwasserstoffen ($C_nH_m$), Benzol ($C_6H_6$), Alkoholen, insbesondere Äthanol, Estern und Äthern in Luft und Abgasen.

Die Erfindung wird durch das folgende Beispiel und die Figuren näher erläutert.

Beispiel

In einem Rundkolben mit Rückflußkühler ($CaCl_2$-Rohr) und Gaseinleitungsrohr wurden 25 g $SnCl_4$ mit 60 ml Äthylacetat und 22 ml Essigsäure zum Sieden erhitzt. Zum schnelleren Austreiben des entstehenden Chlorwasserstoffes wurde ein langsamer Strom von trockenem Argon in die siedende Lösung geleitet. Die Reaktion war nach etwa 3 Stunden - am Ausbleiben der HCl-Entwicklung kenntlich - beendet. Die Lösung konnte nach dem Abkühlen direkt verwendet werden. Sie enthält etwa 10 % $SnO_2$.

Aus einer Lösung bei Raumtemperatur auf Quarz und $Al_2O_3$-Keramik im Tauchverfahren abgeschiedene $SnO_2$-Schichten konnten zu Halbleiter-Gassensoren hoher Empfindlichkeit verarbeitet werden.

Erfolgt die Beschichtung des Substrats durch Besprühen,

so wird die Beschichtungslösung auf ein geheiztes Substrat gesprüht, dessen Temperatur so hoch ist, daß eine quantitative Oxidation der Metallverbindung und der Lösungsmittel gewährleistet ist.

In den Figuren zeigt:

Fig. 1 einen Schnitt eines Dünnschicht-Gassensors ebener Bauform,

Fig. 2 einen Schnitt einer ebenen Bauform zur Integration mehrerer Sensoren,

Fig. 3 und 4 Schnitte von Sensoren zylindrischer Bauform,

Fig. 5 eine graphische Darstellung der Abhängigkeit der Empfindlichkeit eines Sensors von der Heizleistung,

Fig. 6 eine graphische Darstellung der Abhängigkeit des Stromverhältnisses $\frac{I}{I_o}$ eines Sensors vom Alkoholpartialdruck in Luft.

In Fig. 1 ist der einfachste Aufbau eines Gassensors, eine ebene Bauform auf beliebigem Substrat dargestellt. Das ebene Substrat 1, z.B. Quarzglas, Oxidkeramik, Silizium-Scheiben mit und ohne $SiO_2$-Deckschicht, ist einseitig beschichtet, beispielsweise mit einer amorphen erfindungsgemäß hergestellten Schicht 2. Die Beheizung erfolgt entweder von außen oder durch eine Heizschicht, Heizwendel oder dgl. von der zweiten Seite. Im Fall einer oxidierten Siliziumscheibe kann das Silizium als Heizwiderstand verwendet werden. Die Kontaktierung der Sensorschicht erfolgt entweder durch aufgepreßte Edelmetallkontakte 3 oder durch Edelmetalldünnschichten, die auf die Sensorschicht aufgebracht werden.

Fig. 2 zeigt eine Anordnung in ebener Bauform für eine Integration verschiedener Sensoren auf einem einzigen Substrat gemäß der Erfindung. Das Substrat 4, z.B. Oxidkeramik - wegen der relativ guten Wärmeleitung - trägt

auf einer Seite eine Flächenheizung 5 aus einer CrNi-Schicht, einer $SnO_2$:Sb-Schicht oder einer $In_2O_3$:Sn-Schicht und eine Kontaktschicht 6 aus beispielsweise Au. Auf der anderen Seite sind Edelmetallkontaktschichten 8 beispielsweise aus Au angeordnet, die erfindungsgemäß im Maskensprühverfahren mit verschiedenen Sensor-Oxidhalbleiterschichten, z.B. amorphem $SnO_2$ paarweise beschichtet werden. Diese Oxidschichten können kristallin oder amorph sein.

In Fig. 3 ist ein Einzelsensor mit einem Keramikrohr 9 aus beispielsweise $Al_2O_3$, einer Halbleiterschicht 10 aus amorphem $SnO_2$, einer Kontaktschicht 11 aus Platin und der Heizwendel 12 aus NiCr in zylindrischer Bauform dargestellt. Der Heizbedarf ist niedrig. Die Heizwendel 12 aus Widerstandsdraht, beispielsweise NiCr, gibt die Heizenergie fast vollständig an die Sensoroberfläche ab. Das Auswechseln der Heizwendel erfordert nur geringen Aufwand.

Fig. 4 zeigt eine Alternative zu Fig. 3. Sie veranschaulicht einen Einzelsensor zylindrischer Bauform mit einer Heizschicht 16 an der Innenseite des Trägers. Das Teil 13 stellt ein Keramikrohr aus beispielsweise $Al_2O_3$ dar und 15 eine Kontaktschicht aus Platin. Die erfindungsgemäß hergestellte amorphe Halbleiterschicht 14 besteht beispielsweise aus amorphem $SnO_2$.

Fig. 5 zeigt die Abhängigkeit der Empfindlichkeit eines $SnO_2$:Zn-Einzelsensors zylindrischer Bauform von der Heizleistung bei 114 vpm Äthanol in Luft.

Fig. 6 zeigt die Abhängigkeit des Stromverhältnisses $\frac{I}{I_o}$ eines $SnO_2$:Zn-Sensors zylindrischer Bauform vom Alkoholpartialdruck in Luft ($I_o$ = Sensorstrom ohne Alkoholdampf) bei einer Heizleistung von 4,5 W.

14 Patentansprüche
6 Figuren

Patentansprüche

1. Verfahren zur Herstellung von Gassensoren durch Aufbringen einer Metalloxid-Halbleiterschicht auf ein Substrat und Anbringen der Kontaktschicht und Trägerheizvorrichtungen, d a d u r c h g e k e n n z e i c h n e t , daß ein elektrisch isolierender Körper mit einem Film einer organischen Lösung enthaltend eine Metallverbindung, die bei der thermischen oder hydrolytischen Zersetzung in Metalloxid übergeht, beschichtet und der Lösungsfilm durch stufenweise Wärmebehandlung in eine dünne Metalloxid-Halbleiterschicht übergeführt wird.

2. Verfahren nach Anspruch 1, d a d u r c h g e k e n n z e i c h n e t , daß der Lösungsfilm bei Temperaturen bis zu 80°C auf das Substrat aufgebracht, das Lösungsmittel verdampft und anschließend das beschichtete Substrat in sauerstoffhaltiger Atmosphäre erhitzt wird.

3. Verfahren nach Anspruch 1, d a d u r c h g e k e n n z e i c h n e t , daß die organische Lösung während der ersten Wärmebehandlungsstufe aufgesprüht wird.

4. Verfahren nach Anspruch 1 und 2 oder 1 und 3, d a d u r c h g e k e n n z e i c h n e t , daß eine organische Lösung verwendet wird, die bei der Zersetzung binäre Verbindungen der allgemeinen Formel $A_nO_m$ liefert, wobei A ein Element aus der Gruppe der Seltenen Erden, der Edelmetalle oder der Übergangsmetalle und O Sauerstoff darstellen und n und m die Anteile des jeweiligen Elementes sind.

5. Verfahren nach Anspruch 1 und 2 oder 1 und 3, d a d u r c h g e k e n n z e i c h n e t , daß eine organische Lösung verwendet wird, die bei der Zersetzung

ternäre Verbindungen der allgemeinen Formel $A_nB_mO_p$ liefert, worin sowohl A als auch B ein Element aus der Gruppe der Seltenen Erden, der Edelmetalle oder der Übergangsmetalle und O Sauerstoff darstellen und n, m und p die Anteile des jeweiligen Elementes sind.

6. Verfahren nach Anspruch 1 bis 5, d a d u r c h g e k e n n z e i c h n e t , daß der elektrisch isolierende Träger in die organische Lösung getaucht wird.

7. Verfahren nach Anspruch 1 bis 5, d a d u r c h g e k e n n z e i c h n e t , daß die organische Lösung auf den elektrisch isolierenden Träger aufgetropft wird.

8. Verfahren nach Anspruch 1 bis 5, d a d u r c h g e k e n n z e i c h n e t , daß die organische Lösung auf den elektrisch isolierenden Träger aufgeschleudert wird.

9. Verfahren nach Anspruch 1 bis 5, d a d u r c h g e k e n n z e i c h n e t , daß die organische Lösung auf den elektrisch isolierenden Träger aufgesprüht wird.

10. Gassensoren auf Basis von Metalloxid-Halbleiterschichten hergestellt aus organischen Lösungen gemäß anspruch 1 bis 9.

11. Gassensoren nach Anspruch 10, g e k e n n z e i c h n e t d u r c h eine Dotierung.

12. Gassensoren nach Anspruch 11, d a d u r c h g e k e n n z e i c h n e t , daß sie mindestens ein Dotierungselement aus der Gruppe der Seltenen Erden, der Edelmetalle oder der Übergangsmetalle enthalten.

13. Gassensoren nach Anspruch 10 bis 12, gekennzeichnet durch ein Substrat (1), eine Metalloxid-Halbleiterschicht (2) und eine Kontaktschicht (3).

14. Gassensoren nach Anspruch 10 bis 12, gekennzeichnet durch Integration mehrerer Sensoren auf einem Substrat.

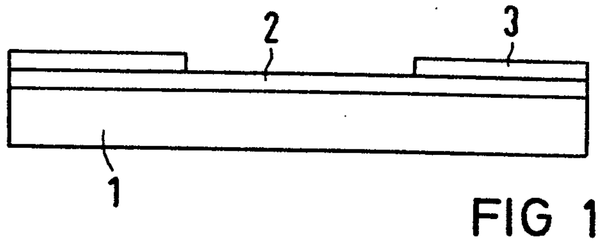


FIG 1

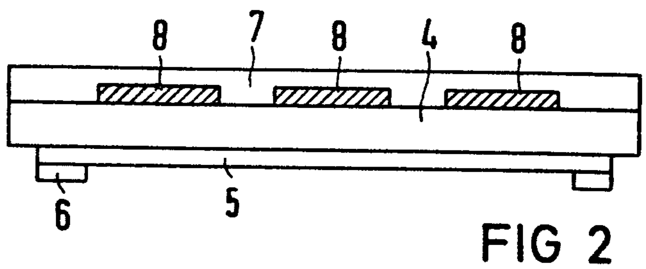


FIG 2

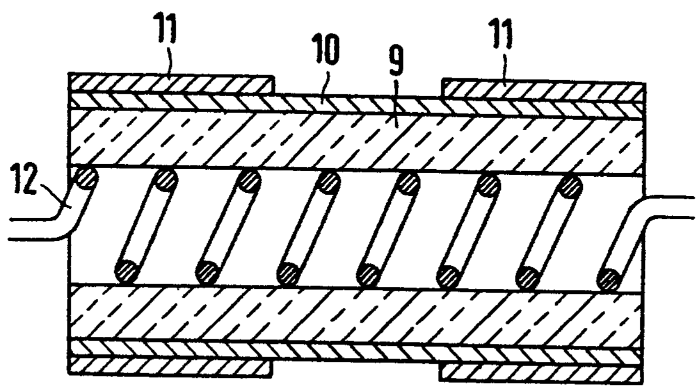


FIG 3

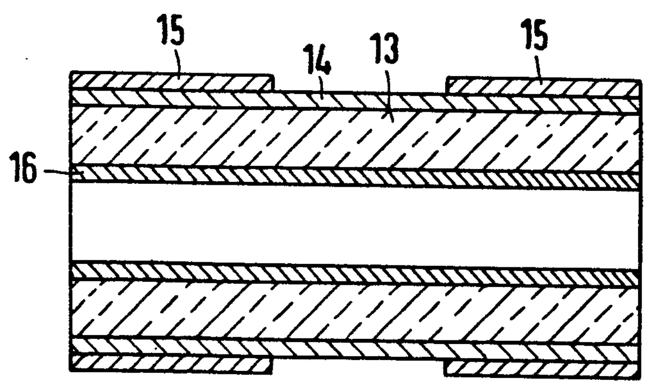


FIG 4

0005481

78 P 7046 2/2

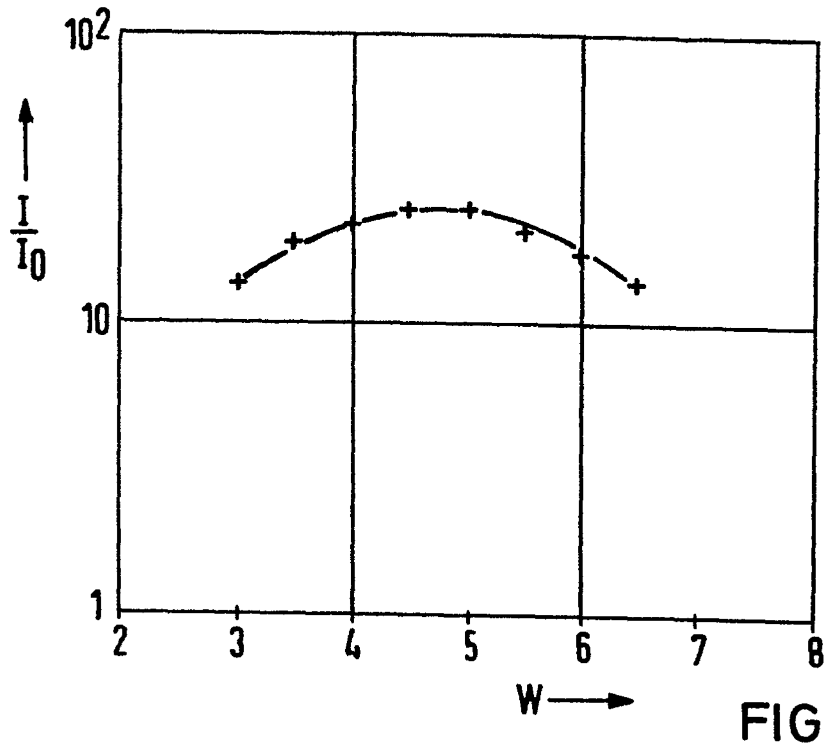


FIG 5

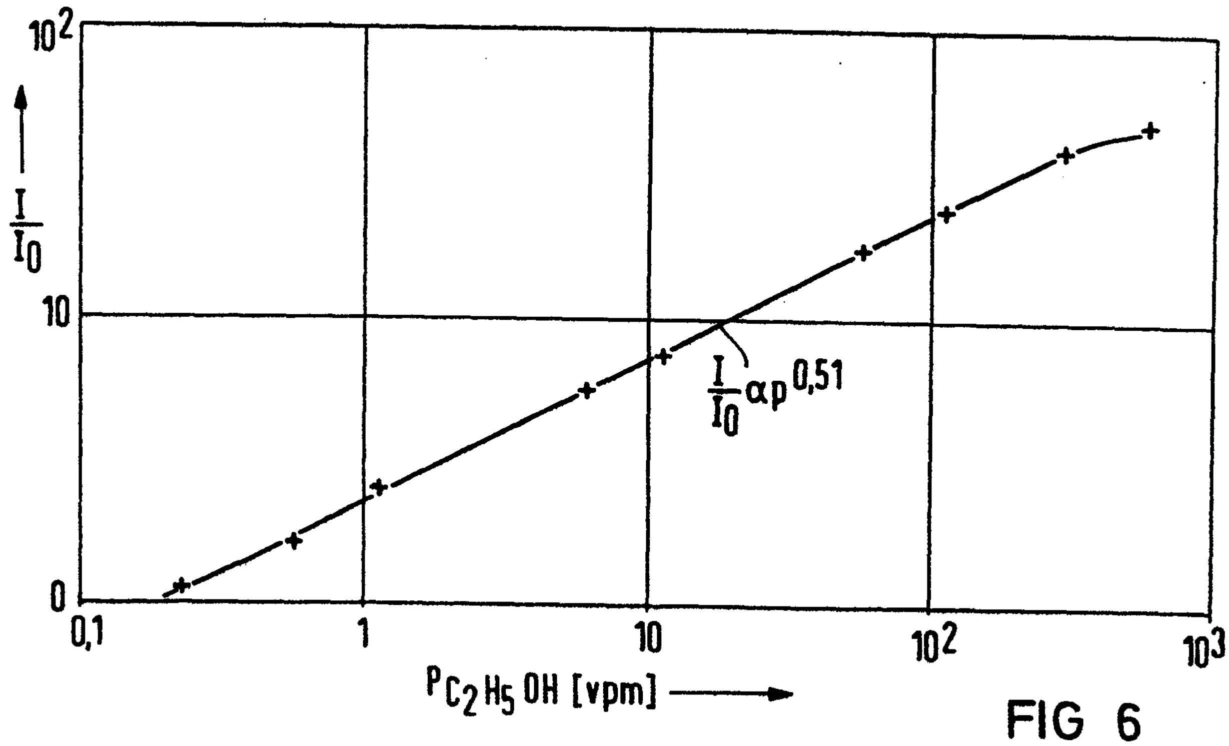


FIG 6

0005481

Europäisches Patentamt

**EUROPÄISCHER RECHERCHENBERICHT**

Nummer der Anmeldung
EP 79 10 1356

**EINSCHLÄGIGE DOKUMENTE**

| Kategorie | Kennzeichnung des Dokuments mit Angabe, soweit erforderlich, der maßgeblichen Teile | betrifft Anspruch |
|---|---|---|
| | FR - A - 2 368 035 (CERBERUS AG)<br>* Seite 3, Zeile 36 bis Seite 6, Zeile 38 *<br>-- | 1,2,4, 10,11, 13 |
| | FR - A - 2 364 449 (LABORATOIRE DE PHYSICOCHIMIE APPLIQUEE ISSEC SA)<br>* Seite 2, Zeilen 1-21; Seite 4, Zeilen 32-35 *<br>-- | 1,3-5, 9,12, 13 |
| A | US - A - 3 951 603 (H. OBAYASHI)<br>* Seite 1; Zusammenfassung *<br>-- | 1,5 |
| A | FR - A - 2 299 709 (MATSUSHITA ELECTRIC INDUSTRIAL CO. LTD.)<br>* Seiten 16,17 *<br>-- | 1,4,5 |
| A | FR - A - 2 325 161 (MATSUSHITA ELECTRIC INDUSTRIA CO. LTD.)<br>* Seite 11 *<br>---- | 1,5 |

KLASSIFIKATION DER ANMELDUNG (Int.Cl.²)

G 01 N 27/12
H 01 L 7/00

RECHERCHIERTE SACHGEBIETE (Int. Cl.²)

G 01 N 27/12

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 06-07-1979 | DUCHATELLIER |